# EUROPEAN PATENT APPLICATION

(11) **EP 4 421 668 A1**
(43) Date of publication of application: **28.08.2024**
(21) Application number: 24159029.8
(22) Date of filing: 22.02.2024
(51) Int. Cl.: G06F 21/56

(54) **SYSTEM AND METHOD FOR IDENTIFYING INFORMATION SECURITY THREATS**

(30) Priority: 27.02.2023 RU 2023104386; 08.02.2024 US 202418436130
(71) Applicant: AO Kaspersky Lab, Moscow 125212 (RU)
(72) Inventor: SERGEEV, Victor G., 125212 MOSCOW (RU); SKABLONSKY, Andrey V., 125212 MOSCOW (RU); VORONTSOV, Dmitry V., 125212 MOSCOW (RU); SPRAVTSEV, Yury V., 125212 MOSCOW (RU)
(74) Representative: Chimini, Francesco

(57) **Abstract**

Disclosed herein are systems and methods for identifying information security threats. An exemplary method comprises: searching a machine-readable medium of a computer for data corresponding to at least one deleted file, when data corresponding to a deleted file is found, reading at least a portion of the data into RAM, analyzing the read data for information about information security threats, and when information about information security threats is detected, generating notification. In another example, the method comprises: searching for data corresponding to at least one deleted file, when data corresponding to the deleted file is found, checking for a possibility of analyzing the data, when conditions of analysis are satisfied, reading at least a portion of the data into RAM, analyzing the read data for information about information security threats, and when information about information security threats is detected, generating notification about the detected information security threat.

## Description

### FIELD OF TECHNOLOGY

The present disclosure relates to the field of information security, and more specifically to methods for identifying information security threats, such as malicious software and computer attacks.

### BACKGROUND

In modern society, computer information systems (also known as information systems - a set of computing devices and communications used to communicate them, an information system is also called corporate infrastructure) play an important role. At the same time, there is a sharp increase in the number of information security (IS) threats, which can include various malicious software (malware) and computer attacks (cyberattacks). Malware may include worms, computer viruses, Trojan horses, hacking tools, unwanted software. Computer attacks by cybercriminals are widespread, in particular, targeted attacks (TA), as well as persistent attacks of increased complexity (Advanced Persistent Threat - APT) on an information system. Attackers can pursue a variety of goals, from stealing employees' personal data to industrial espionage.

Modern security tools implement a wide variety of methods for detecting malware and computer attacks: signature-based and heuristic analysis methods, proactive security technologies, behavioral analysis, intrusion detection systems (IDS), firewall, emulator, and sandbox. In addition, the security tools use various cloud technologies and modern methods of detecting malware and computer attacks using machine learning methods. Thus, modern detection technologies are mainly aimed at detecting an active infection. Antiviruses make it possible to proactively block the execution of malicious code, and the IDS make it possible to detect intrusion into a computer network and notify the owner of confidential information about the intrusion.

Malware can infect a computer in various ways, for example, when visiting an infected website, when opening a malicious attachment in an e-mail, when a removable drive is connected, over a local network, and others. One of the ways malware can infect a computer is by using downloaders or droppers. A downloader is software for downloading malware over a network. Dropper is software that can deliver to the victim's computer or smartphone other malware. Thus, the main task of the downloader and dropper is to quietly install other malware, the so-called payload, on the target device. However, there may be traces of infection, such as any information about how the computer was infected by malware, such as indicators of compromise (IOCs), information about the dropper or downloader that installed the malicious file.

Unlike the downloader, which downloads the necessary components from the cybercriminals' server, the dropper contains them. When launched, it extracts the payload (malware) and saves it to the device. The payload can contain the malware files themselves or parts of them, such as libraries. Also, the dropper and downloader can run malware installation files. Another feature of downloaders and droppers is that that once the payload has been downloaded and installed, the downloader or dropper itself can be removed from the computer's file system, thus removing all traces of its presence. Therefore, a security tool (for example, an antivirus) cannot always determine how malware appeared on a computer. This problem is especially relevant if the security tool (antivirus) was installed on the computer after the downloader or dropper was uninstalled. That is, the security tool will not be able to find traces of infection and determine the infection chain, and will not be able to find those malware infections that were carried out before the analysis. In the information security industry, an infection chain is a set of multi-stage attack tools that are sequentially loaded into an infected system. In this case, the ultimate goal of the attackers is to install and launch the payload. It is worth noting that elements of the infection chain can be present on several computers of the information system. For example, one of the computers may be the intermediate point of a computer attack on the other computers of the information system.

Computer attacks can be carried out in a similar way. Although cybercriminals try to hide the traces of infection, there may still be indicators of compromise on the victim's computer, including among deleted files. For example, after a computer attack is initiated, an attacker can delete the system event log, which contains a service installation event with a name pattern that matches the malware family, or the system call log can contain indicators of compromise.

An attacker can use malware to automatically steal passwords (password stealer). To do this, the attacker installs a dropper on the victim's computer, which in turn installs malware to steal passwords, after which the dropper is removed. After obtaining passwords from accounts on other computers, the password-stealing malware sends the obtained passwords to the control center and is also deleted on the first computer. If the security tool or antivirus was installed only after the information security incident occurred, the tool will not be able to detect the infection chain and traces of the computer attack that led to the information security incident, which consists in the theft of account passwords.

In addition, the antivirus may be absent from the computer for a long time or be disabled by the user, and by the time the antivirus is installed, some or all of the information about information security threats may be deleted from the computer's file system, which will complicate the detection of information security threats.

Another challenge for information security is new previously unknown malware, including malware that exploits vulnerabilities, in particular zero-day vulnerabilities. For such security threats, signatures or behavioral patterns have not yet been created for the proactive defense tool or behavioral heuristics for the heuristic defense, and other security technologies may also miss a new threat. Moreover, such malware can be removed from the computer shortly after the malicious payload is executed. Even if after some time the security tool receives updated antivirus databases containing rules for detecting previously unknown malware, the security tool will not be able to determine the fact of past infection of the computer and will not be able to notify the user about the damage caused to the information security of the computer.

In addition, an attacker can penetrate the IS by exploiting vulnerabilities and use malware and techniques/procedures for which there is no detection logic in the company's detection systems (for example, antivirus technologies, IDS, EDR, SIEM, and others) at the time of their active actions. At the end of their operation to steal confidential data, attackers often remove traces of their presence, such as cleaning logs and removing malware from the system's disk that they used to move through the network (lateral movement) from the point of entry to the location where confidential information is stored.

Over time, developers of detection systems can add detection logic to detection systems (for example, antivirus technologies, IDS, EDR, SIEM, and others), but since the attacker has already removed his malware, these tools can no longer detect a computer attack after the fact.

Thus, a technical problem arises, which consists in the low level of detection of information security threats that arose before the computer was analyzed for information about information security threats or were missed during the previous analysis. Known technologies have shortcomings that prevent a full solution of the claimed technical problem.

Therefore, there is a need for a method and a system for improving identification of information security threats.

### SUMMARY

Example embodiments of the invention relate to systems and methods for identifying information security threats.

In one example, a method for identifying information security threat is disclosed, the method comprising: searching a machine-readable medium of a computer for data corresponding to at least one deleted file; when data corresponding to a deleted file is found, checking for a possibility of analyzing the data found using conditions of analysis; when the conditions of analysis are satisfied, reading at least a portion of the data that is found corresponding to the deleted file into a random access memory (RAM) of the computer; analyzing the read data for information about information security threats; and when information about information security threats is detected, generating a notification about the detected information security threat.

In one example, the information security threats comprise at least one of: malware, and a computer attack, wherein information about the malware includes malware data, and information about the computer attack includes indicators of compromise.

In one example, the information about the computer attack further includes malware data.

In one example, the conditions of analysis include at least one of: it is possible to read the path to the deleted file; it is possible to read at least part of the contents of the deleted file; and the deleted file is not among the actual files.

In one example, the conditions of analysis additionally include: it is possible to read at least a portion of the contents of the deleted file, wherein the deleted file has not been overwritten or corrupted.

In one example, the conditions of analysis additionally include: it is possible to read at least a portion of the contents of the deleted file, wherein the deleted file has been overwritten or corrupted, provided that the read data of the deleted file is sufficient to perform an analysis for information about information security threats.

In one example, the machine-readable medium is searched for data corresponding to at least one deleted file when information about a second information security threat has been previously detected on the computer or on a remote server associated with the computer.

In one example, upon detection of information about an information security threat, information about the second information security threat is included in the generated notification of the detected information security threat based on results of an analysis of the read data.

In one example, the machine-readable medium is searched for data corresponding to at least one deleted file, when information about a second information security threat has been previously detected on the computer or on a remote server associated with the computer, wherein in the event that the information security threat is malware and the second information security threat is the second malware, after the second malware is detected, the connection between the malware and the second malware is checked, wherein, when the connection between the malware and the second malware is detected, the malware and the second malware are attributed to the same infection chain, and information about the identified infection chain is included in the notification about the detected information security threat.

In one example, the malware and the second malware are attributed to the same infection chain when a time interval between operations with deleted files, in the data of which the malware and the second malware were found, is within specified limits, wherein the operations with the files include at least one of: creating, deleting, modifying, opening, executing.

In one example, the malware and the second malware are attributed to the same infection chain, when a previously known computer attack uses the malware and the second malware, and the notification of the detected information security threat additionally includes information about the computer attack.

In one example, the machine-readable medium is searched for data corresponding to at least one deleted file when information about a second information security threat has been previously detected on the computer or on a remote server associated with the computer, wherein the information about the information security threat is an indicator of compromise and the information about the second information security threat is a second indicator of compromise, and when, after the second indicator of compromise is detected, the relationship between the indicator of compromise and the second indicator of compromise is checked, and when a relationship between the indicator of compromise and the second indicator of compromise is detected, the indicator of compromise and the second indicator of compromise are referred to the same threat to information security, and information about the detected computer attack is included in the notification about the detected information security threat.

In one example, the indicator of compromise and the second indicator of compromise are referred to the same computer attack when the time interval between operations on deleted files in the data of which an indicator of compromise and a second indicator of compromise was found is within specified limits, where the operations on the files include at least one of the following: creating, deleting, modifying, opening, executing.

In one example, the indicator of compromise and the second indicator of compromise are referred to the same computer attack, when a previously known computer attack uses an indicator of compromise and a second indicator of compromise, wherein the notification of the detected information security threat additionally includes information about the said computer attack.

In one example, the data of the deleted file that is read is analyzed using antivirus databases updated from the time the file was deleted.

In one example, the data corresponding to at least one deleted file is searched by at least one of the following methods: by low-level analysis of the file system, by comparing actual files with files from at least one backup copy of the files, by using "file carving" technologies, by using "file slack space extraction" technology, and by performing cluster-by-cluster analysis.

In one example, in a low-level analysis of the file system, free cells on the machine-readable medium in the master file table are searched for; found cells are analyzed for a structure corresponding to the structure of the file cell; a structure of the cell is analyzed; and the cell is recognized as containing information on the deleted file, wherein the contents of the cell are used to search for blocks of machine-readable medium, storing the contents of the file, and reading the contents of the file.

In one example, the analysis of selected deleted files is performed by sending metadata of the selected deleted files to the remote server and receiving feedback from the remote server.

In one example, data corresponding to at least one deleted file is searched by performing at least one pass through a machine-readable medium on a computer.

In one example, the deleted file data includes at least one of the following: metadata, and content.

In one example, the conditions of analysis are checked: in all found data in the deleted file, or only in the metadata of the file.

In one example, a method for identifying information security threats is disclosed, the method comprising: searching a machine-readable medium of a computer for data corresponding to at least one deleted file, when data corresponding to a deleted file is found, reading at least a portion of the data that is found corresponding to the deleted file into a RAM of the computer, analyzing the read data for information about information security threats, and when information about information security threats is detected, generating a notification about the detected information security threat.

In one example, the information security threats comprise at least one of: malware, and computer attack, wherein the information about the malware includes malware data, and the information about the computer attack includes indicators of compromise.

In one example, the information about the computer attack additionally includes malware data.

In one example, the machine-readable medium is searched for data corresponding to at least one deleted file when information about a second information security threat has previously been detected on the computer or on a remote server associated with the computer.

In one example, upon detection of information about an information security threat based on results of an analysis of the read data, information about the second information security threat is included in the generated notification of the detected information security threat.

In one example, data corresponding to at least one deleted file is searched on the machine-readable medium, when information about a second information security threat has been previously detected on the computer or on a remote server associated with the computer, wherein, in the event that the information security threat is malware and the second information security threat is the second malware, after the second malware is detected, a connection between the malware and the second malware is checked, when the connection between the malware and the second malware is detected, the malware and the second malware are attributed to the same infection chain, and information about the identified infection chain is included in the notification about the detected information security threat.

In one example, the malware and the second malware are attributed to the same infection chain, when a time interval between operations with deleted files, in the data of which the malware and the second malware were found, is within the specified limits, where the operations with the files include at least one of the following: creating, deleting, modifying, opening, executing.

In one example, the malware and the second malware are attributed to the same infection chain, when a previously known computer attack uses the malware and the second malware, and the notification of the detected information security threat additionally includes information about the said computer attack.

In one example, data corresponding to at least one deleted file is searched on the machine-readable medium when information about a second information security threat has been previously detected on the computer or on a remote server associated with the computer, wherein information about the information security threat is an indicator of compromise and information about the second information security threat is a second indicator of compromise, and when, after the second indicator of compromise is detected, the relationship between the indicator of compromise and the second indicator of compromise is checked, and the relationship between the indicator of compromise and the second indicator of compromise is detected, the indicator of compromise and the second indicator of compromise are referred to the same threat to information security, and information about the detected computer attack is included in the notification about the detected information security threat.

In one example, the indicator of compromise and the second indicator of compromise are referred to the same computer attack when the time interval between operations on deleted files in the data of which the indicator of compromise and the second indicator of compromise was found is within specified limits, where the operations on the files include at least one of the following: creating, deleting, modifying, opening, executing.

In one example, the indicator of compromise and the second indicator of compromise are referred to the same computer attack when the previously known computer attack uses an indicator of compromise and a second indicator of compromise, wherein the notification of the detected information security threat additionally includes information about the said computer attack.

In one example, the analysis of the read data of the deleted file is performed using the antivirus databases updated from the time the file was deleted.

In one example, data corresponding to at least one deleted file is searched by at least one of the following methods: by low-level analysis of the file system, by comparing actual files with files from at least one backup copy of the files, by using "file carving" technologies, using "file slack space extraction" technology, and by performing cluster-by-cluster analysis.

In one example, in a low-level analysis of the file system, free cells on the machine-readable medium in the master file table are searched, the found cells are analyzed for the presence of a structure corresponding to the structure of the file cell, the cell structure is analyzed, and the cell is recognized as containing information on the deleted file, wherein the contents of the cell are used to search for blocks of machine-readable medium, storing the contents of the file, and reading the contents of the file.

In one example, the analysis of selected deleted files is performed by sending metadata of the selected deleted files to the remote server and receiving feedback from the remote server.

In one example, data corresponding to at least one deleted file is searched by performing at least one pass through a machine-readable medium on the computer.

In one example, the deleted file data includes at least one of the following: metadata, and content.

According to one example of the disclosure, a system is provided for identifying information security threats, the system comprising at least one machine-readable medium of a computer; and at least one hardware processor coupled with the at least one memory and configured, individually or in combination, to: search the machine-readable medium of the computer for data corresponding to at least one deleted file, when data corresponding to a deleted file is found, reading at least a portion of the data that is found corresponding to the deleted file into a RAM of the computer, analyzing the read data for information about information security threats, and when information about information security threats is detected, generating a notification about the detected information security threat.

The first technical result is an increase in the level of detection of information security threats, in particular malware and computer attacks.

The second technical result is a reduction in the time to detect information security threats, in particular malware and computer attacks.

The third technical result is an increase in the detection rate of malware infection chains.

The fourth technical result is an increase in the detection rate of malware infection traces.

The fifth technical result is an increase in the detection rate of malware infections whose traces have been removed from the computer's file system.

The sixth technical result is to improve the quality of technologies for detecting malware and computer attacks, in particular, the system for detecting traces of intrusion into the system, the incident response service, and the threat search service.

### BRIEF DESCRIPTION OF THE DRAWINGS

The accompanying drawings, which are incorporated into and constitute a part of this specification, illustrate one or more example embodiments of the present disclosure and, together with the detailed description, serve to explain their principles and implementations.
**Fig. 1** illustrates a block diagram of an exemplary system for identifying information security threats.
**Fig. 2** illustrates an example of a method for identifying information security threats.
**Fig. 3** illustrates an exemplary of a security tool for an information security threat.
**Fig. 4** presents an example of a general purpose computer system on which example embodiments of the present invention can be implemented.

### DETAILED DESCRIPTION

Example embodiments of the invention are described herein in the context of a system, method, and a computer program for identifying information security threats. Those of ordinary skill in the art will realize that the following description is illustrative only and is not intended to be in any way limiting. Other examples will readily suggest themselves to those skilled in the art having the benefit of the disclosure. Reference will now be made in detail to implementations of the example embodiments as illustrated in the accompanying drawings. The same reference indicators will be used to the extent possible throughout the drawings and the following description to refer to the same or like items.

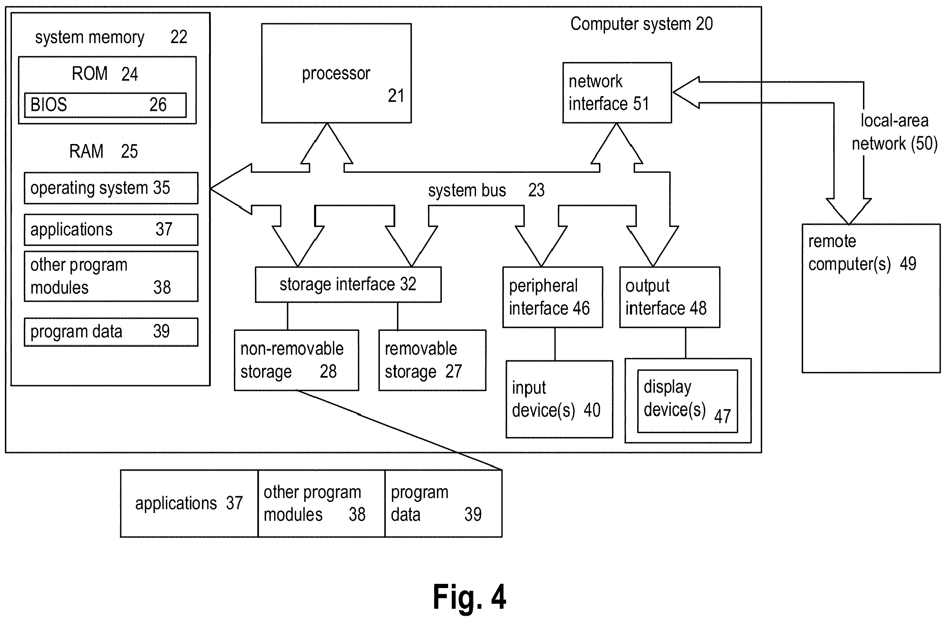

In one example, some or all of the system for identifying information security threats may be implemented on the processor of a general-purpose computer (which, for example, is depicted in **Fig. 4**)**.** In this case, the components of the system may be realized within a single computing device, or distributed amongst several interconnected computing devices.

The present disclosure describes a technical solution for identifying information security threats. For ease of understanding, a brief list of terminology and concepts is first provided below.

A file refers to a set of related records stored on a machine-readable medium and considered as a whole. The file is uniquely identified by specifying the name of the file, its extension, and the path of access to the file. Each file consists of metadata (also known as attributes) and content (also known as the body of the file). The metadata of a file primarily includes its name, content type, date and time of creation, name of the creator, size, conditions for granting permissions to use it, and method of access. The contents of the file can be programs, data, texts, and any other information.

A file system refers to a part of an Operating System (OS) that allows files to be written and read on machine-readable medium. The file system defines the logical and physical structure of the file, the identification, and the associated data of the file.

File delete refers to a procedure of removing a file from a directory and/or file system on a machine-readable medium. Deleting a file does not mean that it is physically erased from the machine-readable medium. At the time of deleting a file, only information about it in the directory and/or in the file system is erased. In the present disclosure, a deleted file may include a collection of data that remains on a machine-readable medium and corresponds to the file after the file has been deleted. The data corresponding to a deleted file may include some or all of the data corresponding to the file after the file was deleted. There are two types of data corresponding to a deleted file - metadata, content.

Indicators of Compromise (lOCs, less often indicators of infection, indicators of a computer attack) refer to artifacts or residual signs of intrusion into an information system, for example, a computer attack, observed on a computer or network. Typical indicators of compromise are, for example, antivirus signatures (malware signatures), IP addresses, file checksums, URLs, domain names of botnet command centers that have been seen in known computer attacks. There are a number of standards for indicators of compromise, in particular: OpenlOC, STIX, CybOX, etc.

A computer attack refers to a set of covert and long-term activities carried out by an attacker and aimed at the information system of an organization or an individual in order to penetrate the network and cause various kinds of damage to the organization or individual.

A targeted attack (TA) includes a computer attack on the information system of a specific organization or a specific individual with the aim of penetrating the network and causing various types of damage to the organization or individual.

An Advanced Persistent Threat (APT) comprises a sophisticated, long-lasting, well-planned, multi-pronged computer attack that uses sophisticated malware, social engineering techniques, and data about information system under attack.

Malware refers to any program designed to perform any unauthorized, malicious, or unwanted action on a computer device. The malware can be used as part of a computer attack or without it.

The following are examples of malware:
- viruses;
- macro viruses for Word and Excel;
- boot viruses;
- script viruses, including batch viruses that infect the Windows shell, Java applications, etc.;
- keyloggers;
- programs for stealing passwords;
- backdoor trojans;
- crimeware - malware designed to automate the commission of financial crimes;
- spyware;
- adware and other types of malware;
- hacking tools; and
- unwanted software.

An Information Security (IS) threat refers to a set of conditions and factors that create a risk of an information security breach. In one example, the information security threat comprises at least one of the following: a malware, a computer attack. The information about malware includes malware data (for example, the verdict of the security tool, hashes of files, file paths, dates of appearance of the specified files on the computer, signatures, and other information about the detected malware, in particular malicious files). The information about a computer attack includes indicators of compromise. In a particular example, the information about a computer attack additionally includes malware data.

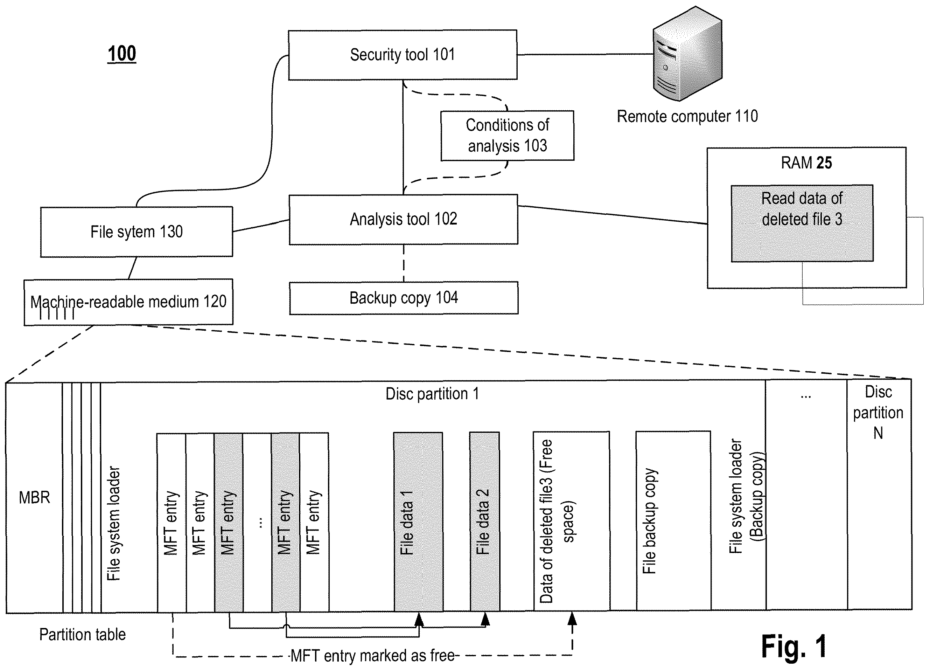

**Fig. 1** illustrates a block diagram of an exemplary system **100** for identifying information security threats. The system **100** may be implemented on computer **20** (an example of a general-purpose computer system is shown in **FIG. 4**).

In one example, the system **100** comprises a security tool **101** and an analysis tool **102.** The analysis tool **102** is designed to search (scan) data corresponding to at least one deleted file on the machine-readable medium **120** (deleted file data). When deleted file data is found, the analysis tool **102** reads at least part of the deleted file's data into the RAM **25** on computer **20.** The machine-readable medium **120** may be any machine-readable medium, e.g., a non-removable storage device **28,** a removable storage device **27,** which are shown in **FIG. 4****.** The method of the present disclosure may be implemented using any number and combination of machine-readable medium **120.**

In one example, the deleted file data includes at least one of the following: metadata (all or part of the metadata), content (all or part of the contents of the deleted file, also the body of the deleted file). That is, the deleted file data may include only metadata, only the content, or a combination of the metadata and contents of the deleted file.

In one example, when data corresponding to a deleted file is found, a possibility of analyzing the data found is checked using conditions of analysis **103.** The conditions of the analysis **103** will be explained later. In one example, when the conditions of the analysis **103** are met, at least a portion of the data of the deleted file is read into the RAM **25.**

It should be noted that checking the possibility of analyzing the detected data by means of conditions of analysis also implies reading into the RAM **25** (e.g., to a temporary buffer, to the cache) of the data on which the specified check is performed, and the volume of such data may be less than the volume of all the data found corresponding to the deleted file. Moreover, after checking, the data read for checking are released from the RAM **25,** after which the deleted file data is read into the RAM **25** to the extent necessary for subsequent analysis. Moreover, the amount of data required for analysis may exceed the amount of data required to verify the conditions of analysis. For example, only the deleted file's metadata may be sufficient for checking, while the analysis may be performed using the metadata and contents of the deleted file. In another example, the checking might be performed using the metadata of the deleted file, and part of the contents of the file. For the analysis, the metadata and all the contents of the deleted file that is found may be used.

In one example, at least a portion of the deleted file's data is read to RAM **25** whenever the deleted file's data is found. In this example, the conditions of the analysis **103** are not checked.

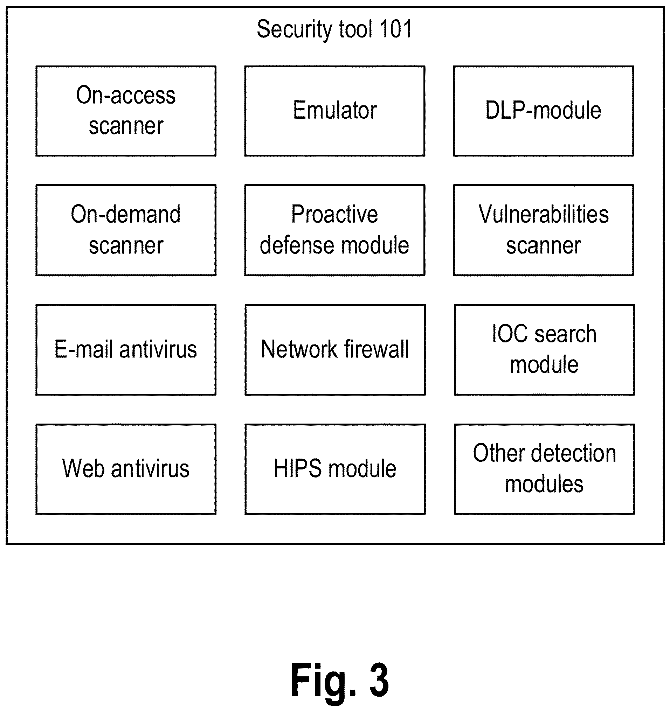

In one example, the security tool **101** is designed to analyze (detect) the data of the deleted file that is read for a presence of information security threats (more details about the operation of the security tool **101** are disclosed in conjunction with **FIG. 3**). Thus, the analysis is performed to determine whether information security threats, i.e., information about the specified information security threats are found by searching the read data of the deleted file for indicators of compromise. If information about the information security threat is detected, the result of the analysis contains the information about the detected information about the information security threat that is found (discovered) during the analysis.

In one example, a notification generated when an information security threat is detected may contain information (meta-information) about the detected information security threat (malware or computer attack). The information (data) about the malware may include data such as, for example, a verdict of the security tool **101,** the hashes of the files, the paths of the files, the dates of appearance on the computer **20** specified files, signatures, and other information about the detected malware, in particular malicious files. The information about a computer attack may include indicators of compromise. The information about the computer attack can also include malware data if the malware detected is indicative of a computer attack.

In one example, the notifications that is generated may be transmitted to the remote computer **110** for further analysis, in particular, to identify and investigate information security incidents and take measures to ensure information security.

In the case where malware is an information security threat, the analysis of the read data of the deleted file for malware may include scanning using signature-based and heuristic analysis methods, proactive security technologies, vulnerability scanner, network firewall, emulator, sandbox, machine learning methods, and other methods (see **Fig. 3** for more details).

At the same time, based on the results of the analysis, the deleted file itself may be recognized as a malicious file, or a potentially malicious file, or a dual-use hacking tool (that is, one that can be used for both legitimate and malicious purposes), or containing several malicious files, if the deleted file is an archive. In addition, the deleted file can be a hacking tool or one of the files used by the hacking tool (e.g., a dynamic library or database).

In addition, the deleted file may contain information about the information security threat, which is one or another indicator of compromise, such as malicious URLs, hashsums of malicious components, and log entries that may end up on computer **20** after it has been infected with malware or a computer attack. The deleted file may also contain indicators of compromise, such as hacking tool configurations, temporary hacking tool files, or hacking tool report, a remote system event log that contains a service installation event with a name pattern that matches the malware family. Thus, in one example, the analysis of the read data of the deleted file for the presence of information security threats (both malware and computer attacks) includes the detection of indicators of compromise in the read data. In this example, the method of the present disclosure makes it possible to identify traces of infection as well as the infection chain, and therefore the method may be used to identify those malware infections whose traces have been removed from the file system. In addition, the method of the present disclosure makes it possible to detect computer attacks using the detected indicators of compromise.

For example, reports published by antivirus companies for a known Carbanak APT attack may provide a list of MDS hashes or Yara rules of all malicious components that may end up on computer **20** after it has been infected in a specified attack. In this example, the MDS hashes or Yara rules specified are indicators of compromise. Moreover, individual such components may or may not cause direct harm to the computer **20,** however, they testify to an information security threat - a computer attack by the Carbanak APT, which will be detected by the method of the present disclosure. In this case, the analysis of the read data of the deleted file includes checking the hash of the deleted file against the list of indicators of compromise, searching the file for hashes from the list, or scanning with a Yara rule. And if a hash from the list is detected, information about a possible Carbanak APT attack may be included in the notification about the detected information security threat.

The security tool **101** and the analysis tool **102** access files and deleted files on the machine-readable medium **120** of the computer **20** which are accessed by the file system **130.**

Referring to **Fig. 1****,** an example of a way to organize disk space using the example of the NTFS file system is illustrated. The machine-readable medium contains a master boot record (MBR), one or multiple logical partitions of the machine-readable medium **120** and a corresponding partition table of the machine-readable medium **120.** In this example, partition 1 of the machine-readable medium **120** contains multiple files, and for each file, there is an entry in the master file table (MFT). If a file is deleted, the MFT entry is marked as free, i.e., the MFT entry indicates a disk recording space. However, the contents of the deleted file remain on the machine-readable medium **120.** At the same time, the contents of the deleted file may be partially or completely overwritten with new data in the future. Thus, after deletion, it is possible to read all or part of the contents of the deleted file, or the metadata of the deleted file, especially on computer systems with low file system activity. It is also worth noting that this structure of disk space organization, as well as the ability to read data from deleted files, is characteristic not only of the NTFS file system, but also of most other file systems. In particular, for FAT (FAT16, FAT32), exFAT, HPFS, ext2, ext4, HFS, and other file systems. Therefore, the method of the present disclosure may be implemented for most file systems, in particular, those listed above.

One of the advantages of the method of the present disclosure is that the deleted file analysis can be performed "on the fly/on stream/in real time"-i.e., without recovering or otherwise writing the deleted files to the file system **130** on the machine-readable medium **120.** In this case, the data of the deleted file is read into the RAM **25.**

In one example, after analyzing the read data of the deleted file for information about information security threats, the read data is deleted from the RAM **25.** This method of analysis significantly reduces the analysis time by using fast RAM **25** instead of the slow memory of the machine-readable medium **120,** as well as due to the timely release of excess data (read data of the deleted file) from the RAM **25.** In addition, this method avoids the recovery of the deleted file, potentially containing malware, to the machine-readable medium **120** of the user's computer, thus the method of the present disclosure may be executed without endangering the information security of the computer **20.** In addition, the reading of the data into RAM **25** occurs in such a way as to prevent the malicious functionality of the deleted file from being executed. For example, the data may be read without running, only part of the data may be read, and/or use other similar methods to avoid execution. This feature also makes it possible to reduce the detection time of malware compared to, for example, the analysis of a pre-stored image of the machine-readable medium **120.** Preservation of the image of the machine-readable medium **120** for the purpose of analyzing it for the presence of malware is typically used in forensic analysis. In addition, the method of the present disclosure may be scaled to run on a large number of computers **20,** which will increase the information security of the entire information system, as well as find the infection chain, the elements of which are present on several computers of the information system **20.**

In addition, real-time operation on computer system **20** has a significant advantage over existing approaches based on imaging a disk or other machine-readable medium and transporting the image to a central server, which recovers deleted files from the disk image by forensic methods on a separate system and then scans them with an antivirus. After all, such approaches cannot be effective in enterprise-wide because they require imaging all systems in the enterprise and transporting them all to a central server. Images can be hundreds or thousands of gigabytes long and can take dozens of hours or even more to remove and transport if users are connected to the enterprise network via a VPN and/or work remotely over a low-bandwidth link. Therefore, the use of the method of the present disclosure, which to a certain extent combines the work of an antivirus that works in real time on a computer system, in combination with a system for searching for deleted files and analyzing them for information about information security threats, makes it possible to bypass these technological obstacles.

A further advantage of the method of the present disclosure is that the reading of deleted file data into RAM **25** is not the disadvantage that arises when recovering or otherwise writing deleted files to the file system **130** on the machine-readable medium **120.** Namely, the ability to write the recovered file on top of another deleted file, which then cannot be recovered/read and analyzed for presence information security threats.

Many well-known antivirus tools send suspicious files to a remote server for detailed analysis and, based on the remote server's verdict, decide whether to trigger an alarm. The suspicious file criterion is based on the detection logic, which may not be present at the time of the presence of a malicious file in the system and will appear in the antivirus database after the malicious file has been deleted. Therefore, combining an antivirus with a system for searching for data of remote Information security allows the system of the present disclosure to scan deleted files with new detection logic, search for suspicious files among them, send them to a remote server (for example, to a remote computer **110**) for detailed analysis, after which the deleted file will be recognized as malicious, and thus detect new, previously unknown malware. The released signature on this previously unknown malware can detect other previously unknown malware samples, thus increasing the detection rate.

Among other things, the combination of the antivirus and the deleted file data search system can detect other indicators of compromise and traces of infection. For example, a deleted file data retrieval system can detect and scan syslog data that has been intentionally deleted by an attacker. The log may contain events that can be scanned by the antivirus to decide that malware was running in the file. For example, when moving from system to system, malware "cobaltstrike" installs a malicious service on the target system, the fact that the service is installed on the system generates event 7045 in the Windows syslog with the following patterns:
- Service Name: <7-alphanumeric-characters>;
- Service File Name: %COMSPEC% /b /c start /b /min powershell -nop -w hidden - encodedcommand <base64-encoded-command>.

For example, if an attacker deletes the log, the method of the present disclosure detects the fact of compromise and malware installation by reading the deleted log data and by searching for the indicator of compromise described above and other indicators of compromise.

In another example, when there are indicators of compromise that contain artifacts left behind by malware. For example, the "mimikatz" utility creates files with the ".kirbi" extension on a machine-readable medium when dumping Kerberos tickets. The presence of such a file or a deleted file may be considered as an indicator of compromise.

The system **100** may begin searching for deleted file data based on data (e.g., commands, instructions) received from a user of the computer **20,** including a security officer or security operation center (SOC) analyst, on a schedule, after the installation of the system **100** on the computer **20,** after the installation of the security tool **101** on the computer **20** or antivirus, after updating the antivirus databases of the security tool **101,** when the conditions of the analysis **103** change, when an information security threat is detected on computer **20** by the security tool **101,** or when other conditions are met. Thus, in one example, on a machine-readable medium **120,** system **100** start searching for data corresponding to deleted files when the condition is met according to which information about an information security threat previously has been detected on the computer or on a remote server associated with the computer (the first information security threat). Based on the analysis of the read data (the second information security threat), information about the first information security threat and the second information security threat are included in the notification about the detected information security threat.

In another example, the first information security threat and the second information security threat are attributed to the same infection chain (or to the same computer attack) if a computer attack is known to use the first information security threat and the second information security threat in the sequence in which the mentioned information security threats occurred. For example, a dropper may contain malware that will be installed on the computer and that configures the OS, after which the malware and dropper are removed. In another example, the dropper extracts the downloader, and then the downloader downloads the malware and installs it on the computer. In another example, several droppers extract parts of malware (e.g., libraries, files) or parts of files (e.g., those that do not contain executable file headers) onto a computer, and then the final step is to assemble the malware from several files. In another example, the downloader analyzes legitimate software constructors on the computer and downloads certain components for the found constructors, which will then be assembled into a specific malware. In all of these examples, droppers, downloaders, and malware parts can be detected among these deleted files as information about information security threats, and the aggregate of such information about information security threats will be collected into a single infection chain corresponding to one of the previously known computer attacks, which is an information security threat. Information about previously known computer attacks may be contained on computer **20,** e.g., in the form of a list, a database, or a list of known computer attacks, which also contains indicators of compromise corresponding to said computer attacks and, if available, corresponding malware.

In one example, if the security tool **101** detects malware (the first malware), then the system **100** searches for the deleted file data, reads the deleted file data into the RAM **25,** and detects the malware in the read data. At the same time, if the system **100** finds malware in the read data (the second malware), then the infection chain can be restored (from the first malware and the second malware), as well as traces of malware infection. It is also worth noting that although the first malware was detected earlier than the second malware, the second malware may have appeared on computer **20** before the first malware. In this case, the notification of a detected malware infection on a computer includes information about the first malware and the second malware, as well as the detected infection chain.

In another example, the read data of the deleted file is analyzed using the antivirus databases updated from the time the file was deleted (the current antivirus databases). This example may be used to reveal new malware whose signatures (or other rules) were created or obtained after the file was deleted. In addition, computer attacks using such new malware can be detected.

In one example, the analysis may include primary and secondary analyses. Moreover, for the primary analysis, databases with a high risk of errors of the second type may be used, and the secondary analysis may use all databases.

It is also worth noting that legitimate files/applications may also be present in the infection chain, for example, those used to assemble a single malicious file from several files. In this case, the said legitimate files can be identified as indicators of compromise.

In another example, after malware is detected in the read data of the deleted file, the connection between the malware detected before the search for deleted files is started and the malware detected in the read data is checked. For example, the time interval between operations with deleted files in the data of which malware was found is checked, and if the time interval is within a specified limit, the detected malware is attributed to the same infection chain. In addition, the type of malware can be determined, such as a dropper, if it is shown that a file that has been deleted but its data is stored on a machine-readable medium **120,** before it was deleted, started a process from which a new file was created, in which the malware was detected. Operations with deleted files include at least one of the following: creating, deleting, modifying, opening, and executing.

In another example, the first malware and the second malware are attributed to the same infection chain if a computer attack using the first malware and the second malware is known. For example, the data of the first malware and the second malware may be contained in the information about a known computer attack. In this case, the notification of the detected information security threat additionally includes information about the mentioned computer attack.

In another example, malware was detected on a remote information system server (which is another computer not shown in the figure), for example, by manual forensic analysis of the remote server. Subsequently, one or more signatures were created for the security tool **101** to detect the detected malware. These signatures were then delivered to the security tool **101** on computer **20,** which can also be a server. Next, computer **20** searched for data corresponding to the deleted files and analyzed the read data taking into account the new signatures. If, as a result of the analysis, a second malware using new signatures was detected on computer **20,** then the malware detected on the remote server and the second malware detected on computer **20** will be attributed to the same infection chain.

In another example, if the information about the first information security threat is an indicator of compromise (the first indicator of compromise) and the information about the second information security threat is an indicator of compromise (the second indicator of compromise), as well as if, after the second indicator of compromise is detected, the relationship between the first indicator of compromise and the second indicator of compromise is checked. When a relationship is detected, the first indicator of compromise and the second indicator of compromise is attributed to a single information security threat, which is a computer attack. Then, information about the detected computer attack (information security threat) is included in the notification about the detected information security threat.

In another example, the first indicator of compromise and the second indicator of compromise are referred to as the same computer attack if the time interval between operations on deleted files is within the specified limits, where operations on deleted files include at least one of the following: creating, deleting, modifying, opening, executing.

In yet another example, the first indicator of compromise and the second indicator of compromise are referred to as one computer attack if a computer attack is known to use the first indicator of compromise and the second indicator of compromise, and the notification of the detected information security threat additionally includes information about said computer attack.

In one example, other methods can be used for search for deleted file data. For example, the data of a deleted file may be retrieved by comparing the actual files (present on the machine-readable medium **120**) with files from at least one backup copy **104** (enumeration of files). The backup copy **104** may be any copy of the contents of the machine-readable medium **120.** On the computer **20,** one or more backup copies **104** may be retained. In addition, the backup copy **104** may be stored on the machine-readable medium **120** itself or on any other storage medium, including a remote computer **110.** For example, in Windows, the implementation of backup copy **104** is implemented using volume shadow copy service (VSS) technology. Other examples are mobile operating systems, e.g., Android, iOS, in which backup copes **104** are stored in cloud storage on remote devices. Thus, the method of the present disclosure may use any implementation of the backup copy **104,** including those stored both recently (e.g., less than 24 hours) and long ago (e.g., a month or a year ago). It is also worth noting that the method of the present disclosure makes it possible to analyze previous versions of actual files if previous versions have been deleted.

Another way to search for deleted file data is the "file carving" technology, which is a method of finding (with possible recovery, reading) deleted file data from fragments in the absence of file system metadata. Another method is the "file slack space extraction" technology, i.e., analysis of unoccupied space in the data cells of files on machine-readable medium **120.** These methods of searching for deleted file data may be used in conjunction, including in conjunction with searching for files in backup copy **104,** or without this searching if there are no backups copies **104.** For example, in a backup copy **104,** the operating system may regularly add and deleted files from certain directories. In this case, other methods of searching for deleted file data may be additionally used.

In another example, deleted file data is searched on machine-readable medium without reference to the file system. For example, if information about a file is deleted from the file system, and part of the file data is overwritten, but there are clusters containing the old information, then cluster-by-cluster analysis can be carried out, as a result of which malware data or other information about information security threats will be found.

In one example, the search for deleted file data is performed sequentially in various ways, as described above, depending on the priority of one or another method. Moreover, the priority may be determined, for example, by the speed of the operation of the particular method or the availability of the method for the analyzed file system.

In yet another example, another way to find deleted file data is to perform low-level file system analysis. For example, using the NTFS file system as an example, in the process of this analysis, the method may: search for free cells in the MFT file table; analyze the found cells for the presence of a structure that corresponds to the cell structure of the deleted file; parse the cell structure and extract attributes from the cell; and recognize the cell as containing information on the deleted file. Moreover, in one example, the contents of the cell may be used to search for the blocks of the machine-readable medium **120** that store (contain) the contents of the deleted file, and to read the contents of the deleted file. One can also check whether the said parsing of the structure for the contents of the file and the reading of the contents into the RAM **25** is correct. A deleted file can only be partially read (if part of the contents of the deleted file is found in the machine-readable medium **120**). However, even in this form, the data of the deleted file (a few parts) can be analyzed. A part of the packaged files can be extracted from a partially read archive or dropper. The read data from the beginning of the deleted file can contain metadata, such as information about the format of the deleted file as a whole, the name of the deleted file, and others. In addition, the deleted file may have a known format header at the beginning, which will serve as additional information about the deleted file itself.

In one example, the conditions of the analysis **103** are checked by the security tool **101** in all data found in the deleted file. In another example, the conditions of the analysis **103** are checked only in the deleted file metadata contained in the found deleted file data.

In one example, the conditions of the analysis **103** may include one or more of the following:
1) it is possible to read the path to the deleted file;
2) It is possible to read at least part of the contents of the deleted file (the deleted file can be partially or completely read); and
3) the deleted file is not among the actual files (present on the machine-readable medium **120**).

The use of such conditions allows to reduce the time it takes to detect malware. For example, the actual files of computer **20** are usually analyzed for malware by the security tool **101** in advance. Therefore, if the deleted file matches one of the actual files, then the re-analysis of the read data of the deleted file for malware is redundant. The situation is similar with known legitimate files: they have been analyzed earlier and the verdict for them is known (if it has not been changed since time). A deleted file can be checked against a list of known files or by sending a deleted file request to remote computer **110** that contains an up-to-date list of known files.

In one example, the above condition of the analysis **103** is tested in a low-level file system analysis. In another example, this condition is also checked when no low-level analysis of the file system is performed.

In one example, the above condition of the analysis **103** further verifies that the deleted file has not been overwritten or corrupted.

In yet another example, the above condition of the analysis **103** further verifies that the deleted file has been overwritten or corrupted, provided that the read data of the deleted file is sufficient to perform an analysis for information about information security threats, or the metadata of said deleted file allows the source file to be retrieved and the source file to be analyzed for information about information security threats.

In yet another example, the above condition of the analysis **103** is checked in the case of an analysis of the backup copy **104.** In another example, this condition is also checked when no analysis of the backup copy **104** is performed.

In yet another example, for this purpose, the security tool **101** sends, to the remote computer **110,** the read metadata or portions of the deleted file, and the remote computer **110** searches for the corresponding source file by comparing the received data and sends meta-information about the source file to the security tool **101** or the source file itself as feedback.

In yet another example, data corresponding to at least one deleted file is searched by at least one pass through the machine-readable medium **120** of the computer **20.** A pass on the machine-readable medium **120** is understood to be a viewing (usually a one-time view) of all or part of the data on the machine-readable medium **120.** This example avoids the situation where, during the first pass, a portion of the data of one deleted file was found, which was then read into RAM **25,** after which it was discovered that the remainder of the data of one deleted file had been completely overwritten by the new file and therefore the read data could not be analyzed. By performing two or more passes on the machine-readable medium **120** on the computer, one can solve this problem by excluding, from the analysis, data that corresponds to deleted files that have been overwritten to such an extent that they are no longer suitable for further analysis. However, the method of the present disclosure also employs a single pass on the machine-readable medium **120,** which increases the speed of the method for detecting information security threats.

**Fig. 1** also provides an example of searching for data corresponding to at least one deleted file (in this example, data corresponding to deleted file 3 will be found) and reading the data of the deleted file 3 whose data remained on the machine-readable medium **120** while the MFT entry was marked as free. In doing so, the deleted file 3 was read into RAM **25** by the analysis tool **102.**

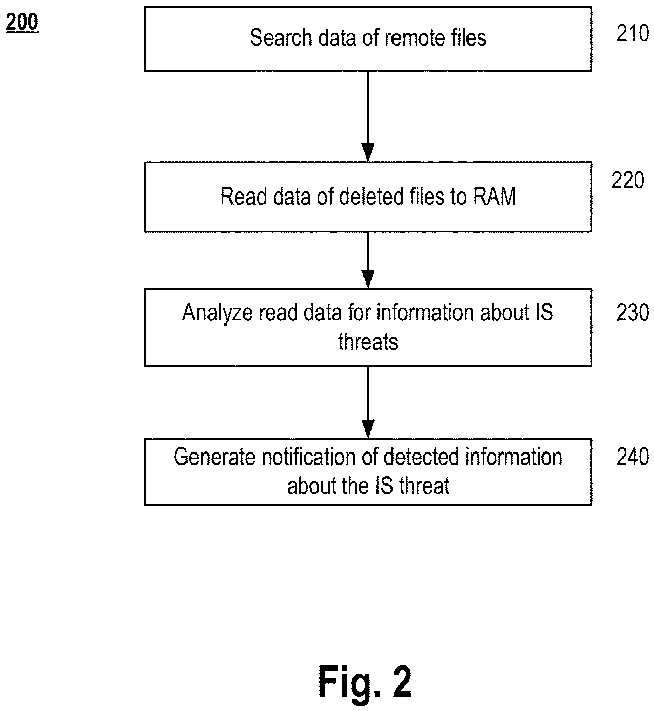

**Fig. 2** illustrates an example of a method **200** for identifying information security threats.

In step **210,** by the computer **20,** method **200** searches the machine-readable medium **120** for data corresponding to at least one deleted file.

In step **220,** when data corresponding to a deleted file is found, method **200** reads at least a portion of the data that is found corresponding to the deleted file into a RAM of the computer, for example, the RAM **25** of the computer **20.**

In step **230,** method **200** analyzed the read data for information about information security threats.

In step **240,** when information about information security threats is detected, method **200** generates a notification about the detected information security threat.

In one example, in step **220,** when the data of the deleted file is found, the method further comprises: verifying the ability to analyze the found data using the conditions of the analysis **103;** when the conditions of the analysis are satisfied, reading at least a portion of the data corresponding to the deleted file into the RAM **25** of the computer **20;** and proceeding to step **230** of method **200** to continue the analysis.

Examples described for the system **100** of **FIG. 1** also apply to the method **200** of **FIG.** 2. Thus, the method of the present disclosure, which consists in a special combination of the stages of searching for deleted file data and analyzing the data found using an antivirus, makes it possible to detect information security threats, such as missed malware infections and computer attacks. For example, in the case of an enterprise, information about timestamps associates with the time when the deleted malicious file was created in the system, hashes, attributes, as well as other meta-information about the deleted file can be added to the antivirus log events and to the notification about the detected information security threat. In addition, the sequence in which the attacker infected systems with the same malware may be determined, and, accordingly, the infected chain may be restored.

Using the example of malware for automatic password theft (password stealer), the method of the present disclosure makes it possible to trace the infection chain for a more detailed investigation of information security incidents related to malware infection or a computer attack, and to take measures aimed at improving information security. In addition, the method of the present disclosure may be used to improve the quality of technologies for detecting malware and computer attacks, for example, such as:, IDSSIEM, threat hunting service.

Thus, the method of the present disclosure makes it possible to solve a technical problem consisting in a low level of detection of information security threats that arose before the computer was analyzed for information about information security threats or were missed during the previous analysis. In addition, the declared technical results will be achieved, namely increased detection of information security threats, in particular malware and computer attacks, reduced detection time for information security threats, in particular malware and computer attacks, increased detection of malware computer infection chains, increased detection of malware computer infection traces, increased detection of malware infections, increased detection of malware infections, traces of which were deleted from the computer file system. In addition, the quality of technologies for detecting malware and computer attacks has been improved, in particular, the intrusion detection system, the incident response service, and the threat hunting service have been improved.

**Fig. 3** illustrates an exemplary **300** of a security tool **101** for an information security threat. The security tool **101** (antivirus or other means of protection/providing security) of the computer **20** may include modules designed to ensure the security of the device, e.g., an on-access scanner, an on-demand scanner, an e-mail antivirus, a web antivirus, a proactive defense module, a HIPS (Host Intrusion Prevention System) module, a DLP (Data Loss Prevention) module, vulnerability scanner, emulator, network firewall, IOC search module, and others. It is worth noting that in one example, the analysis tool **102** is one of the modules of the security tool **101.** In one example, these modules may be part of the security tool **101.** In yet another example, these modules may be implemented as separate software components.

The on-access scanner contains the functionality to detect malicious activity of all opening, running, and saving files on the user's computer system. An on-demand scanner differs from an on-access scanner in that it scans user-defined files and directories at the user's request.

E-mail antivirus is necessary to monitor incoming and outgoing e-mail for malicious objects. Web antivirus is used to prevent the execution of malicious code that may be contained on websites visited by the user, as well as to block the opening of websites. The HIPS module is used to detect unwanted and malicious program activity and block it at the time of execution. The DLP module is used to detect and prevent the leakage of confidential data outside the computer or network. A vulnerability scanner is required to identify vulnerabilities on the device (for example, some components of the security tool are disabled, outdated virus databases are used, a network port is open, etc.). The network firewall monitors and filters network traffic according to the specified rules. The job of the emulator is to simulate the guest system while the instructions of the file in the emulator are executed. The proactive defense module uses behavioral signatures to determine the behavior of applications and classify them by trust level.

The Indicator Scanner searches for traces of compromise, e.g. using YARA (Open Signature Format) signatures, using the Loki scanner, using STIX and JSON formats.

**Fig. 4** is a block diagram illustrating a computer system **20** on which example systems and methods for identifying information security threats may be implemented. The computer system **20** can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system **20** includes a central processing unit (CPU) **21,** a system memory **22,** and a system bus **23** connecting the various system components, including the memory associated with the central processing unit **21.** The system bus **23** may comprise a bus memory or bus memory controller, a peripheral bus, and a local bus that is able to interact with any other bus architecture. Examples of the buses may include PCI, ISA, PCI-Express, HyperTransport^{™}, InfiniBand^{™}, Serial ATA, I²C, and other suitable interconnects. The central processing unit **21** (also referred to as a processor) can include a single or multiple sets of processors having single or multiple cores. The processor **21** may execute one or more computer-executable code implementing the techniques of the present disclosure. The system memory **22** may be any memory for storing data used herein and/or computer programs that are executable by the processor **21.** The system memory **22** may include volatile memory such as a RAM **25** and non-volatile memory such as a read only memory (ROM) **24,** flash memory, etc., or any combination thereof. The basic input/output system (BIOS) **26** may store the basic procedures for transfer of information between elements of the computer system **20,** such as those at the time of loading the operating system with the use of the ROM **24.**

The computer system **20** may include one or more storage devices such as one or more removable storage devices **27,** one or more non-removable storage devices **28,** or a combination thereof. The one or more removable storage devices **27** and non-removable storage devices **28** are connected to the system bus **23** via a storage interface **32.** In an example, the storage devices and the corresponding computer-readable storage medium are power-independent modules for the storage of computer instructions, data structures, program modules, and other data of the computer system **20.** The system memory **22,** removable storage devices **27**, and non-removable storage devices **28** may use a variety of computer-readable storage medium. Examples of computer-readable storage medium include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system **20.**

The system memory **22,** removable storage devices **27,** and non-removable storage devices 28 of the computer system **20** may be used to store an operating system **35,** additional program applications **37,** other program modules **38,** and program data **39.** The computer system **20** may include a peripheral interface **46** for communicating data from input devices **40,** such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device **47** such as one or more monitors, projectors, or integrated display, may also be connected to the system bus 23 across an output interface **48,** such as a video adapter. In addition to the display devices **47,** the computer system **20** may be equipped with other peripheral output devices (not shown), such as loudspeakers and other audiovisual devices.

The computer system **20** may operate in a network environment, using a network connection to one or more remote computers **49.** The remote computer (or computers) 49 may be local computer workstations or servers comprising most or all of the aforementioned elements in describing the nature of a computer system **20.** Other devices may also be present in the computer network, such as, but not limited to, routers, network stations, peer devices or other network nodes. The computer system **20** may include one or more network interfaces **51** or network adapters for communicating with the remote computers **49** via one or more networks such as a local-area computer network (LAN) **50,** a wide-area computer network (WAN), an intranet, and the Internet. Examples of the network interface **51** may include an Ethernet interface, a Frame Relay interface, SONET interface, and wireless interfaces.

Examples of the present disclosure may be a system, a method, and/or a computer program product. The computer program product may include a computer readable storage medium having computer readable program instructions thereon for causing a processor to carry out examples of the present disclosure.

The computer readable storage medium can be a tangible device that can retain and store program code in the form of instructions or data structures that can be accessed by a processor of a computing device, such as the computing system **20.** The computer readable storage medium may be an electronic storage device, a magnetic storage device, an optical storage device, an electromagnetic storage device, a semiconductor storage device, or any suitable combination thereof. By way of example, such computer-readable storage medium can comprise a RAM, a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission medium, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object-oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform examples of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and otherfunctions facilitated by a combination of hardware and software. In certain implementations, at least a portion, and in some cases, all, of a module may be executed on the processor of a computer system (such as the one described in greater detail in **Fig. 4** above). Accordingly, each module may be realized in a variety of suitable configurations, and should not be limited to any particular implementation exemplified herein.

In the interest of clarity, not all of the routine features of the example embodiments are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various examples disclosed herein encompass present and future known equivalents to the known modules referred to herein by way of illustration. Moreover, while examples and applications have been shown and described, it would be apparent to those skilled in the art having the benefit of this disclosure that many more modifications than mentioned above are possible without departing from the inventive concepts disclosed herein.

## Claims

1. A computer executable method for identifying information security threats, the method comprising:
searching a machine-readable medium of a computer for data corresponding to at least one deleted file;
when data corresponding to a deleted file is found, checking for a possibility of analyzing the data found using conditions of analysis;
when the conditions of analysis are satisfied, reading at least a portion of the data that is found corresponding to the deleted file into a random access memory (RAM) of the computer;
analyzing the read data for information about information security threats; and
when information about information security threats is detected, generating a notification about the detected information security threat.

2. The method according to claim 1, wherein the information security threats comprise at least one of: malware, and a computer attack, wherein information about the malware includes malware data, and information about the computer attack includes indicators of compromise.

3. The method according to any of claims 1 to 2, wherein the conditions of analysis include at least one of:
it is possible to read the path to the deleted file;
it is possible to read at least part of the contents of the deleted file; and
the deleted file is not among the actual files.

4. The method according to any of claims 1 to 3, wherein the conditions of analysis additionally include:
it is possible to read at least a portion of the contents of the deleted file, wherein the deleted file has not been overwritten or corrupted.

5. The method according to any of claims 1 to 4, wherein the conditions of analysis additionally include:
it is possible to read at least a portion of the contents of the deleted file, wherein the deleted file has been overwritten or corrupted, provided that the read data of the deleted file is sufficient to perform an analysis for information about information security threats.

6. The method according to any of claims 1 to 5, wherein the machine-readable medium is searched for data corresponding to at least one deleted file when information about a second information security threat has been previously detected on the computer or on a remote server associated with the computer.

7. The method according to any of claims 2 to 6, wherein the machine-readable medium is searched for data corresponding to at least one deleted file, when information about a second information security threat has been previously detected on the computer or on a remote server associated with the computer, wherein in the event that the information security threat is malware and the second information security threat is the second malware, after the second malware is detected, the connection between the malware and the second malware is checked, wherein, when the connection between the malware and the second malware is detected, the malware and the second malware are attributed to the same infection chain, and information about the identified infection chain is included in the notification about the detected information security threat.

8. The method according to claim 7, wherein the malware and the second malware are attributed to the same infection chain when a time interval between operations with deleted files, in the data of which the malware and the second malware were found, is within specified limits, wherein the operations with the files include at least one of: creating, deleting, modifying, opening, executing.

9. The method according to claim 7, in which the malware and the second malware are attributed to the same infection chain, when a previously known computer attack uses the malware and the second malware, and the notification of the detected information security threat additionally includes information about the computer attack.

10. The method according to claim 2 to 9, wherein the machine-readable medium is searched for data corresponding to at least one deleted file when information about a second information security threat has been previously detected on the computer or on a remote server associated with the computer, wherein the information about the information security threat is an indicator of compromise and the information about the second information security threat is a second indicator of compromise, and when, after the second indicator of compromise is detected, the relationship between the indicator of compromise and the second indicator of compromise is checked, and when a relationship between the indicator of compromise and the second indicator of compromise is detected, the indicator of compromise and the second indicator of compromise are referred to the same threat to information security, and information about the detected computer attack is included in the notification about the detected information security threat.

11. The method according to claim 10, wherein the indicator of compromise and the second indicator of compromise are referred to the same computer attack when the time interval between operations on deleted files in the data of which an indicator of compromise and a second indicator of compromise was found is within specified limits, where the operations on the files include at least one of the following: creating, deleting, modifying, opening, executing.

12. The method according to claim 10, wherein the indicator of compromise and the second indicator of compromise are referred to the same computer attack, when a previously known computer attack uses an indicator of compromise and a second indicator of compromise, wherein the notification of the detected information security threat additionally includes information about the said computer attack.

13. The method according to any of claims 1 to 12, wherein data corresponding to at least one deleted file is searched by at least one of the following methods: by low-level analysis of the file system, by comparing actual files with files from at least one backup copy of the files, by using "file carving" technologies, by using "file slack space extraction" technology, and by performing cluster-by-cluster analysis.

14. The method according to claim 13, wherein, in a low-level analysis of the file system, free cells on the machine-readable medium in the master file table are searched for; found cells are analyzed for a structure corresponding to the structure of the file cell; a structure of the cell is analyzed; and the cell is recognized as containing information on the deleted file, wherein the contents of the cell are used to search for blocks of machine-readable medium, storing the contents of the file, and reading the contents of the file.

15. A system for identifying information security threats, the system comprising:
a processor coupled to a the random access memory (RAM), and configured to:
search a machine-readable medium for data corresponding to at least one deleted file;
when data corresponding to a deleted file is found, check for a possibility of analyzing the data found using conditions of analysis;
when the conditions of analysis are satisfied, read at least a portion of the data that is found corresponding to the deleted file into the RAM;
analyze the read data for information about information security threats; and
when information about information security threats is detected, generate a notification about the detected information security threat.
